# EUROPEAN PATENT SPECIFICATION

(11) **EP 2 122 929 B1**
(45) Date of publication and mention of the grant of the patent: **02.06.2010**
(21) Application number: 08709717.6
(22) Date of filing: 17.01.2008
(51) Int. Cl.: H04L 12/56

(54) **NETWORK ORIENTED CONTROL SYSTEM FOR SELF-CONFIGURATION AND SELF-OPTIMIZATION MEASUREMENTS**
NETZWERKORIENTIERTES STEUERSYSTEM FÜR SELBSTKONFIGURATION UND SELBSTOPTIMIERUNGSMESSUNGEN
SYSTÈME DE COMMANDE ORIENTÉ RÉSEAU DE CONFIGURATION ET D'OPTIMISATION AUTOMATIQUES DE MESURES

(30) Priority: 18.01.2007 US 881287 P
(43) Date of publication of application: 25.11.2009
(73) Proprietor: Nokia Corporation, 02150 Espoo (FI)
(72) Inventor: RANTA, Jukka, FIN-20780 Kaarina (FI); HUANG, Leping, 02150 Espoo (FI); DALSGAARD, Lars, FIN-90230 Oulu (FI)
(86) International application number: PCT/IB2008/000104
(87) International publication number: WO 2008/087535

(56) References cited:
- EP-A- 1 276 344
- WO-A-03/098952
- WO-A-2005/032185
- US-A1- 2004 180 701

## Description

### TECHNICAL FIELD:

The exemplary and non-limiting embodiments of this invention relate generally to wireless communication systems, methods, devices and computer program products and, more specifically, relate to configuring neighbor lists in a cell-based wireless telecommunications system.

### BACKGROUND:

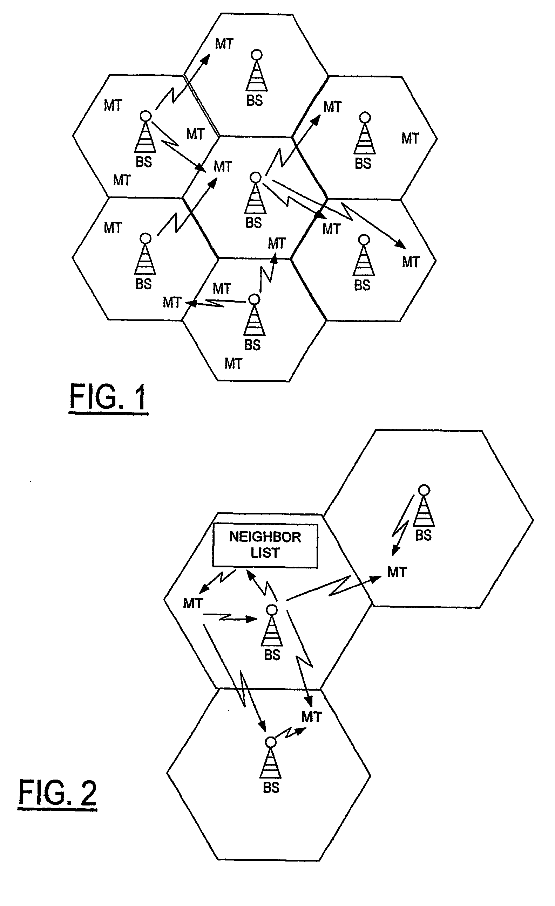

Adjacent cell measurements are carried out in all cell-based telecommunications systems for example as shown in Figures 1 and 2. As known to those skilled in the art, the adjacent cell measurements are the basis for the handover and cell reselection decisions. The user equipment UE, also termed a mobile terminal MT, measures signal quality (such as signal strength, bit error rate BER, bit error probability BEP, or other signal quality parameters in use) from its serving cell and also from adjacent cells and reports these to the network in a measurement report. The measurement reports may be sent at regular intervals or in reply to a request/command from the network. The UE typically determines which cells are adjacent, and more narrowly which ones to measure, based on neighbor lists which are delivered to the UEs on one or more control channels of the wireless system. The neighbor lists contain the necessary data about the adjacent cell so that the UE can find the neighbor cells easily and efficiently. Without the neighbor lists, the search for neighbor cells would consume excessive time and battery power of the UE.

Accordingly, it is essential that the neighbor lists are designed properly as otherwise the mobile terminals would carry out a lot of unnecessary measurements (too many neighbors in the list) or miss cells that would be good candidates for handovers (too few neighbors in the list).

In a large network with a huge or extensive number of small cells, the process of determining the right or most appropriate neighbor to include in the neighbor lists that are used to configure the network is a substantial task. Additionally, there is a desire to make the cell configuration automatic.

One currently proposed solution for configuring the network requires that the mobile terminals do the job of determining the neighbors to include in the neighbor list and the mobile terminals are signaled to measure all theoretically possible neighbors. This solution can be implemented by sending separate measurement commands to the mobile terminals or by adding the potential neighbors in the cell's neighbor list. This is a relatively simple method to get measurement data from the mobile terminals that are in various parts of the cell. In the long run, the data will show which cells are the ones that have a sufficient strength in at least some parts of the serving cell and thus should be included in the neighbor list.

One problem and drawback with the method described above for determining which neighbors to include in the neighbor list is that a substantial measurement time period is required to guarantee that the entire serving cell area has been covered by the measurement data. An improvement to the above approach is described at co-owned US Provisional. Patent Application No. 60/850,901, filed on October 11, 2006 which describes that the UEs determine individually to limit their measurement reports based on certain criteria.

One problem with the UEs measuring all possible neighbor cells is that quite a lot of time is required to guarantee that the whole serving cell area has been covered by the measurement data. Also, because the mobile terminals carrying out the measurements move freely within the serving cell, it is impossible to know when all the places or locations in the cell have been visited by at least some mobile terminals while those mobile terminals are in a mode where measurements are possible. Usually, this means mobile terminals with an active connection, however, mobile terminals in the idle mode may also be used to send measurement reports for the purpose of determining neighbors in the neighbor list.

Further, in the above approach the extended measurements may be kept active for a substantial time interval and the extra power consumption by the mobile terminals that are used in making the extended measurements for the neighbor list determination will more quickly deplete the battery charge of individual mobile terminals. The faster battery discharge will in all likelihood lead to user dissatisfaction, because users generally regard talk and standby time as important metrics of their practical accessibility to wireless networks.

Also, the reliability of the handovers to adjacent cells would suffer when using cells in the neighbor list that were included from the measurements that are not primarily targeted to insure to good handovers, for example, the targeted cell may have less strength than a stronger adjacent cell that would be a better choice for handover and thus lower the quality of the connection.

What is needed is a way to configure the cellular network in an efficient and timely manner without encountering the problems described above.

US 2004/180701 A1 relates to receiving and processing measurement reports of UEs and discloses a radio network controller RNC receiving battery level measurement reports form a plurality of UEs, dynamically updating a local database that indicates battery level measurement report status of the plurality of UEs and a radio resource management RRM instance of the RNC restricting transmission rates of UEs based on the updated battery level measurement report status.

### SUMMARY:

According to an aspect of the invention is a method that includes receiving measurement reports from a plurality of user equipments UEs, dynamically updating a local database that indicates measurement report status of the plurality of user equipments; and restricting a request for a next measurement report to a limited number of the UEs based on the updated measurement report status.

According to another aspect of the invention is a method that includes receiving at a mobile terminal a request for a measurement report, where the request includes an information element that informs a limited number of UEs to send a measurement report. Further in the method it is determined from the information element whether the mobile terminal is within the limited number. For the case where it is determined that the mobile terminal is not within the limited number, the method includes not sending a measurement report in response. And for the case where it is determined that the mobile terminal is within the limited number, the method includes sending a measurement report in response.

According to still another aspect of the invention is an apparatus that includes a receiver, a processor and a transmitter. The receiver is adapted to receive a request for a measurement report, where the request includes an information element that informs a limited number of UEs to send a measurement report. The processor is adapted to determine from the information element whether the apparatus is within the limited number. The transmitter is adapted to send a measurement report in response to the determination that the apparatus is within the limited number, and is further adapted to not send a measurement report in response to the determination that the apparatus is not within the limited number.

These and other aspects of the invention are detailed with more particularity below.

### BRIEF DESCRIPTION OF THE DRAWINGS:

Figure 1 is a schematic representation of a cellular telecommunications system showing a cluster of adjacent cells with mobile terminals MT in each.

Figure 2 is a schematic representation of an example of mobile terminals receiving neighbor list information from base stations.

Figure 3A is a flowchart showing process steps for a network to restrict its requests/commands for mobile terminals to send measurement reports, according to an aspect of the invention.

Figure 3B is a flowchart showing process steps for a network to restrict its requests/commands for mobile terminals to send measurement reports when a network change has occurred, according to another aspect of the invention.

Figure 4 is a signaling diagram between network and one user equipment/mobile terminal for an embodiment where the network broadcasts requests for the UEs/MTs to send measurement reports, according to another aspect of the invention.

Figure 5 is a functional block diagram of a memory in a network element, for tracking history of UE/MT measurement reports for use with Figure 3A.

Figure 6 is a functional block diagram showing relations between processor components within a network element or a UE/MT for carrying out the invention.

Figure 7 is a functional block diagram of a network element or UE/MT for carrying out the invention.

### DETAILED DESCRIPTION:

Unlike the above-incorporated provisional application, aspects of this invention are network-centric, in that the network makes decisions as to restricting measurement reports by restricting its requests for them. While embodiments of this invention may be used in addition to the decisions made at the mobile terminal described in that incorporated application, other embodiments preclude the mobile terminals from making decisions on their own as to whether and when to take a measurement and send it to the network. In that respect, the mobile terminals are constrained to strictly follow the measurement instructions sent by the network.

First are described some considerations that the network may take into account prior to sending to a UE a request for a measurement report. The network may use all, one, or any combination of some of these considerations. In response, the network imposes restrictions on itself as to sending to that UE a request for a measurement report. Some network protocols would term the network's message a measurement request, others may term it a command, but the terminology matters not. Absent some other provision known to the network making the request/command, such as those described in the incorporated provisional application, the UE is expected to comply with the network's request/command.

In general, when the network uses the UEs as measuring devices for network configuration and optimization (e.g., to generate appropriate neighbor lists for handovers), embodiments of this invention find the network taking into consideration power consumption at the UEs. To guarantee a reasonable and fair load amongst the various UEs, the network in some embodiments keeps a record of measurement report history and sends the requests for further measurement reports in view of that history. The view may be specific to the measurement report history of a particular UE to which a request is sent. Also are detailed embodiments where the network sends a broadcast request to the UEs, to which only a statistically limited number of the UEs that receive that broadcast request will be obligated to reply with their measurement report. That broadcast message does not specifically identify which UEs are to respond, but instead each UE determines from an internal calculation whether or not to respond. The internal calculation runs an algorithm using a parameter or information element from that broadcast message, and different UEs get different results from that algorithm despite the algorithm being identical amongst all the UEs. In this manner, the burden taking measurements and reporting the results is spread among the various UEs in a statistically fair manner.

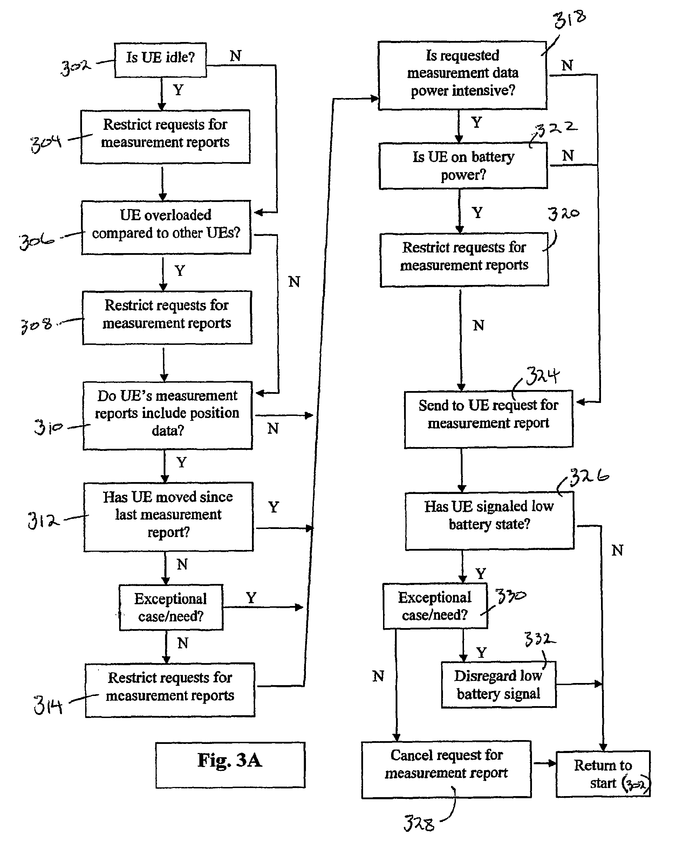

To keep the amount of measurements at a reasonable level, the network uses the following principles, described in the process flow diagram of Figure 3A, as relates to specific UEs. The network accumulates information in a memory from previous measurement reports from a UE, and uses that stored information to determine if and which restrictions it might self-impose with respect to requesting a measurement report from that particular UE.

Throughout this description, a restriction on requesting a measurement report may be a restriction on time, duration, frequency, or some other metric that distinguishes in view of required power consumption or computational burden required at the UE. A restriction may be self-limiting as in a time restriction, or it may apply only for the moment when the network is considering whether to send to that UE a request for a measurement report, in which case the network chooses another UE to send its measurement report request.

At block 302, the network observes the status of the UE activity in the active mode. When the data traffic activity is high, it is easy for the UE to carry out intra-frequency measurement, as the receiver is very active all the time anyway. The UE using a lot of discontinuous reception and transmission (DRX/DTX) is more suitable to inter-frequency and inter-RAT (radio access technology) measurements. This is shown at block 302 as network determining whether or not the UE is idle or active, but this can readily be extended to an amount of activity for an active UE rather than the active/idle distinction. If a UE is idle at block 302 (or below some activity threshold while in then active state), then at block 304 the network imposes a restriction as to requests for measurement reports that it sends to that particular UE. If not, the network does not restrict itself in requesting a measurement report from that UE.

Fig ure 3A is then continued with the network's analysis as to whether a request to this UE would be 'balanced'. The network keeps a record in its memory about the recent measurements for each UE to guarantee that a single UE is not overloaded with measurements and the measurement load is distributed in a fair way to all the UEs. At block 306, the memory is checked to see if this particular UE is overloaded in measurement requests as compared to other UEs being tracked. It yes, then at block 308 the network restricts itself as to requesting that UE to send a measurement report.

Some UEs are equipped to measure their position, such as through GPS, triangulation by signal strength among different base stations, or other such position determining means. In such a case (block 310) the UE would include its position in the measurement reports, and the network tracks that UE's position. If the network determines at block 312 that the UE has not moved since the previous measurement report, the network restricts its measurement requests of that UE at block 314. In an embodiment, the UE is not given further measurements tasks (for configuration or optimization purposes) for an extended period of time, such as for example two or more hours. The position information of a battery-operated UE should be used only when it happens to be available, i.e. the position need not be determined just for this purpose, as it is likely to consume a substantial amount of power. In extreme cases or when a specific need exists in the network that cannot be filled by another UE sending its measurement report, exceptions may be allowed at block 316, which may interrupt the extended restriction time of block 314 or eliminate the restriction completely. When the UE is connected to an external power source, it should determine the position when applicable, regardless of whether or not it determined its position for other purposes unrelated to measurement reporting. Whether or not a UE determines its position specifically for a measurement report when the UE is powered by an external power source may be a decision left to the UE itself, as the network would generally not have knowledge of the UE's power source absent some signaling from the UE.

There are different types of measurement reports that consume different amounts of power to generate, so the network may consider as at block 318 whether a measurement report it desires from a UE is of a power intensive type. This directly takes into account the UE's battery consumption when the network allocates measurement reports. If a power-consuming measurement request, like a blind search, is given to a UE, then another restriction is established at block 320. In an embodiment, the restriction at block 320 is that no subsequent measurement requests of any kind are sent to the same UE for an extended period of time. A virtual average battery consumption record (estimate) is recorded at the network in the measurement history of each UE to support this aspect. If somehow the network determines that a UE is on external power, such as for example during a network test when a UE is known to the network as one used for configuring it (and hence not a true UE), then the restriction at block 320 can be overridden or interrupted at block 322. The same may be true if a (true) UE signals to the network that it is on external power.

Now after running the process previously described for Figure 3A, the network is ready to send a request for a measurement report to a UE (or to a set of UEs), which it does at block 324. In an embodiment, the UE signals that its battery supply is low at block 326, such as in reply to the network's request. If so, then at block 328 the network cancels its request. As seen at block 330, if it is an exceptional case of urgent need, then the network can disregard at block 332 the low battery signal and leave the request stand. The process of Figure 3A is then repeated for the next time the network wants to request a measurement report.

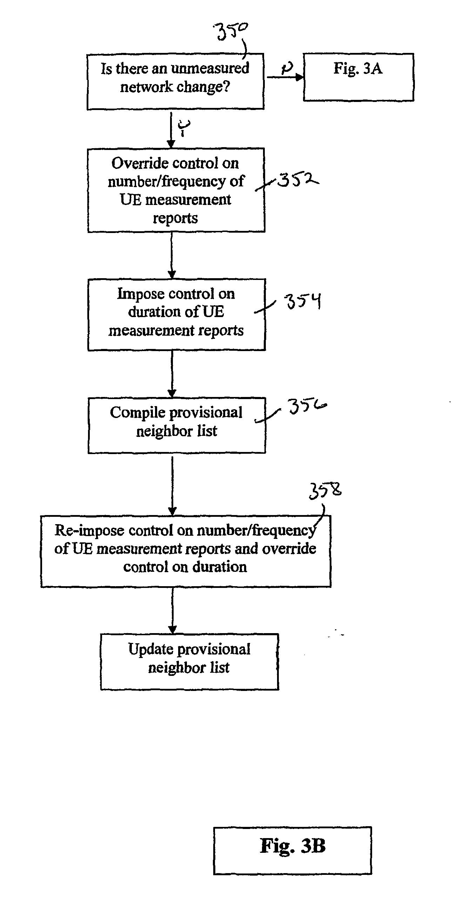

Figure 3A is in the context of the network determining whether or not it should make a measurement report request to a specific UE. Figure 3B is in the context of the network determining how many and how often it will make such requests. An underlying precept of Figure 3B is that the measurement reports are requested and carried out extensively only when there have been significant changes in the network (e.g., new or modified cells in the neighborhood). At block 350, it is determined that such a change has taken place and the new/modified cell has not yet been fully measured. If no, then there are no overrides to the network's normal controls on measurement report requests (number or frequency) and the process of Fig. 3A is followed. If yes, then at block 352 the network overrides that number/frequency control, but to balance that at block 354 the network imposes a limit on the duration of UE measurement reports. Note that these controls may be as to total number/frequency across all reporting UEs, or may be specific to specific UEs as was detailed at Figure 3A. Where specific to UEs, for example, the control on duration at block 354' would prevent the blind search that might be allowed at block 318 of Figure 3A. However these controls are imposed, U E specific or across all aggregated UEs, the network receives a large number of (short) measurement reports and from them compiles a provisional neighbor list at block 356. It is provisional because only short-duration measurement reports were used to compile it after the network change.

Once the provisional list is compiled after a network configuration change, then at block 358 a constraint on the number and/or frequency of UE measurement reports that the network requests is re-imposed (and the duration control from block 354 is overridden). This represents the more routine operation; measurement reports are limited to a fairly low amount when they are used for network optimization purposes in an unchanged network. To spread the measuring and reporting burden across the UEs in a fair and distributed manner, not all terminals are instructed to carry out measurements at the same time, but a reasonable fraction of the terminals is used.

it is anticipated that at least some aspects of this invention are appropriate to be written into a wireless network protocol or standard. Embodiments of the invention can reside wholly in software. The logical elements to implement this invention in that instance are then:
- a memory to store the measurement data and the measurement history,
- signalling elements and protocol for information interchange between the networks and the UEs
- algorithms to handle the signalling related to the measurement command and the measurement reports.

For embodiments where the network signals each UE individually for measurement reports, the required underlying database of measurement history for every UE would become fairly large for a base station. Such a database used for the purpose may be a temporary one, limited to a certain area of the network and/or automatically deleting older measurement report data as new report data for that UE is entered. The self-configuration and optimization measurement approaches detailed herein should be designed so that it is otherwise guaranteed that a single UE does not suffer because of partial history records. For instance, one measurement activity with a separate and independent database should not take place very close (in space or time) to another one.

These teachings are applicable to those cellular systems where the adjacent cell measurements in the idle or active mode are carried out according to measurement requests by the network. It is advantageous that the measurement requests include a flag indicative of the type of the measurement being requested. Consider, a typical/normal measurement request for the handover or cell reselection preparation tends to require the UE to measure the corresponding adjacent cells exactly according to the request and with a high priority, and should be flagged as such. If a request is flagged differently, such as a measurement to support the network configuration, the UE then measures the requested neighbour cells or searches for neighbors without any neighbor list, or alternatively with carrier frequency or RAT information. In any case, these measurement requests flagged for other than handover/reselection purposes may take somewhat more time, and they are carried out with a lower priority. The UE can readily recognize the flag as a low or high priority measurement.

The measurement request may be sent to the UEs using two different principles of implementation. The most exact approach is to send measurement requests to each terminal individually while they are in the active mode, i.e. those that have an established signalling link with the network. The other approach is to broadcast the measurement request, which means that the UEs need not be in the active mode. To prevent every terminal starting to carry out measurements according to the broadcast request, a mechanism is necessary so that different UEs interpret the same broadcast request for a measurement report differently, some replying and some not.

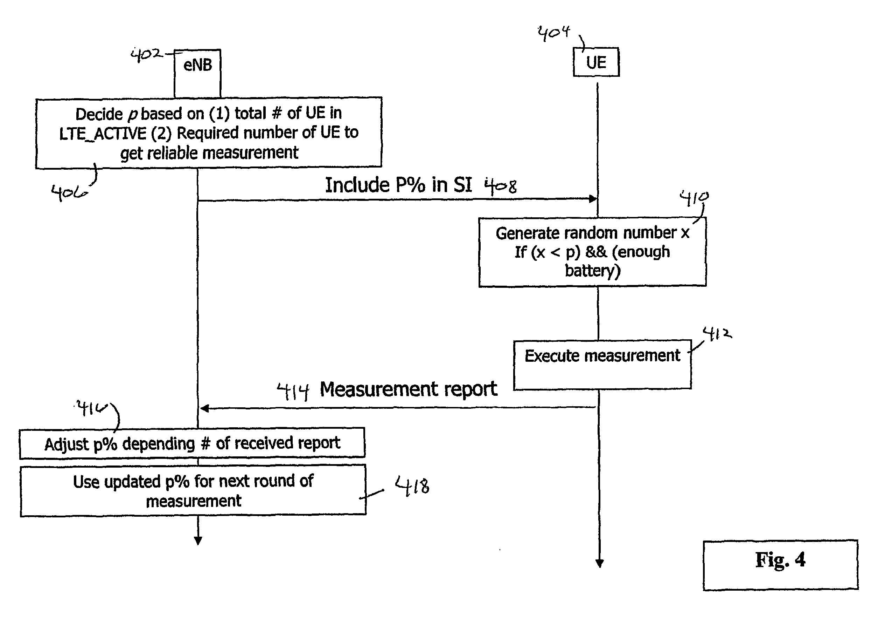

A mechanism based on random numbers is one option for the broadcast approach, shown in the signalling diagram of Figure 4. There is shown a network element as an e-Node B 402, and a single UE 404. In an embodiment, the broadcast request contains an information element IE which tells how large a fraction p of the UEs should start measuring and send their report. The network element 402 decides at 406 the fraction p that it would like to send a measurement report based on a total number of UEs and the number of UE measurement reports that the network would like in order for its measurements to be statistically reliable. The request for a measurement report is then broadcast 408, to include the additional IE with the value for p. The total number of UEs may be, for example, the total number of UEs in the network element's active set (e.g., the long term evolution of EUTRA active set), a number derived from the total number of UEs camped in the tracking area the eNodeB belongs to, the total number of UEs within the coverage area of the cell, or some other grouping of a finite number of UEs.

After receiving such a broadcast request, each UE 404 generates a random number 410 and, according to its value, determines whether to start the measurements or not. For example, if *p*=20, the UEs could generate a two digit random number and all those generating 20 or less would measure and report. The UE's battery status may be taken into account in the random number test Several different methods and formulas may be used, but one advantageous implementation is to multiply the fraction in the broadcast message with the battery charge percentage. This makes the measurements more frequent in the terminals with the full battery. Another way is to allow the terminal to decline or ignore the request, if its battery is low. For example, the UE checks its battery level on receipt of the broadcast message or after generating the random number, and if that check shows its battery level below some predetermined threshold, then the UE will not measure or reply to the broadcast request regardless of the result of the random number generated. The UEs 404 that generate a random number causing them to report based on the broadcast p value then measure 412 and send their measurement reports 414 back to the network element/e-Node B 402. Other implementations besides random number can be used, but that is a simple one.

After one round of polling for measurement reports, the e-Node B 402 may receive measurement reports from smaller or larger number of UEs as was expected from the previous broadcast request with the value p. This may be a statistical anomaly, but more likely it results from the various UE's battery status and/or an inaccurate estimate by the network element of the number of UEs in the cell. The e-Node B 402 can use the number of received measurement reports to adjust 416 the fraction *p*% in the next round of polling 418 so that the value of the IE p is dynamically adjusted to reflect an actual number of UEs reporting in response to the previous measurement report request.

The measurement reports may be sent to the network in the same way in all cases, or some special reporting formats may be designed. For instance, it may be sufficient for the UE to report the detection of a new cell only and omit reporting the signal level it receives from that new cell. On the other hand, measurement reporting after a blind search may require a more extensive format than that used for the more typical case of reporting to finetune network optimization. The method and format of reporting may be indicated in the measurement request message where different formats are used for different types of measurement reports.

An advantage of embodiments of this invention is that the UE is not used as the bookkeeper for the amount of measurements recently carried out. This means that the network must keep such a record, but the network is better disposed in hardware and power supply for such a task. Some alternatives are given as to how battery status may be taken into account for measurement reporting. In embodiments, the network has full control over the measurements, which helps to reduce though not entirely eliminate adverse incentives for UEs to misrepresent their battery status so as to reduce/avoid measurement reports in a UE-centric approach (so as to increase standby/talk time metrics).

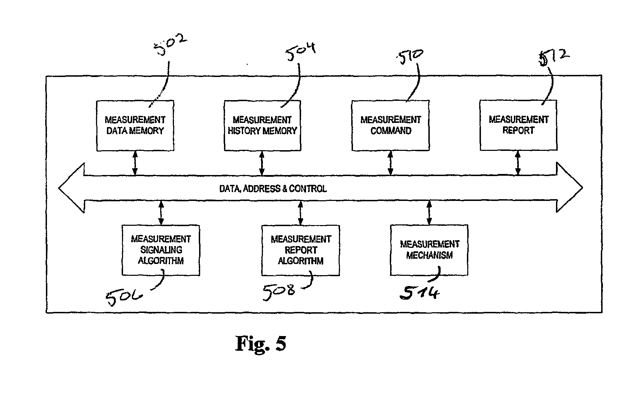

With reference to Figure 5, a functional block diagram showing the major logical elements of the invention are shown therein and described briefly below. A suitable memory is required to store the measurement data 502 and the measurement history 504. One or more appropriate algorithms 506, 508 are required to handle the signalling related to the measurement request/command 510 and the measurement reports 512. For embodiments within the UEs, one or more control algorithms are required to carry out the measurements 514 in co-operation with the other parts of the UE.

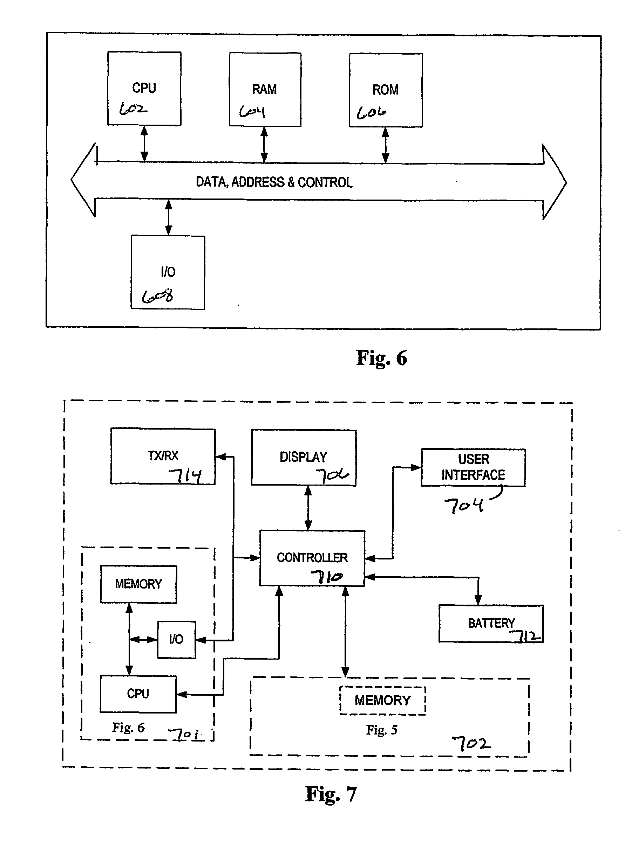

The interactions between the major logical elements should be obvious to those skilled in the art for the level of detail needed to gain an understanding of the concept of the present invention. It should be noted that the concept of the invention may be implemented with an appropriate signal processor such as shown in Figure 6, a digital signal processor or other suitable processor to carry out the intended function of the invention, including a central processor 602, a random access memory RAM 604, read only memory ROM 606, and input/output ports 608 for coupling to other components in the network elementle-Node B or UE in which this processor is disposed.

Turning now to Figure 7, a schematic functional block diagram of a network etement/e-Node B or a UE is illustrated therein showing the major operational functional components which may be required to carry out the intended functions of the e-Node B or UE and implement the concept of the invention. A processor 701 such as the signal processor of Figure 6 carries out the computational and operational control of the device/apparatus in accordance with one or more sets of instructions stored in a memory 702. A user interface 704 may be present, particularly in the UE to provide alphanumeric input and control signals by a user and is configured in accordance with the intended function to be carried out. UE embodiments may also include a display 706 that sends and receives signals from the controller 710 that controls the graphic and text representations shown on a screen of the display in accordance with the function being carried out. UE embodiments rely primarily on a battery 712, whereas network element embodiments use the battery 712 as backup power.

The controller 710 controls a transmit/receive unit 714 that operates in a manner well known to those skilled in the art. The measurement functional logical elements as shown in Figure 5 are suitably interconnected with the controller 714 to carry out the requests by the network and measurements by the UE contemplated in accordance with the invention. It will be recognized by those skilled in the art that the network element and UE may be implemented in other ways other than that shown and described.

At least one of the memories is assumed to include program instructions that, when executed by the associated processor/CPU, enable the electronic device/apparatus to operate in accordance with the exemplary embodiments of this invention, as detailed above. As such, the exemplary embodiments of this invention may be implemented at least in part by computer software executable by the controller/CPU of the network element or UE, or by hardware, or by a combination of software and hardware.

In general, the various embodiments of the UE 10 can include, but are not limited to, cellular telephones, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions.

The memories may be of any type suitable to the local technical environment and may be implemented using any suitable data storage technology, such as semiconductor-based memory devices, magnetic memory devices and systems, optical memory devices and systems, fixed memory and removable memory. The controller/processor may be of any type suitable to the local technical environment, and may include one or more of general purpose computers, special purpose computers, microprocessors, digital signal processors (DSPs) and processors based on a multi-core processor architecture, as non-limiting examples.

The invention involves or is related to cooperation between elements of a communication system. Examples of a wireless communication system include implementations of GSM (Global System for Mobile Communication) and implementations of UMTS (Universal Mobile Telecommunication System). These elements of the communication systems are exemplary only and does not bind, limit or restrict the invention in any way to only these elements of the communication systems since the invention is likely to be used for B3G systems. Each such wireless communication system includes a radio access network (RAN). In UMTS, the RAN is called UTRAN (UMTS Terrestrial RAN). A UTRAN (or Evolved UTRAN) includes one or more Radio Network Controllers (RNCs, or genetically a controller of a radio network), each having control of one or more Node Bs (e-Node Bs), which are wireless terminals configured to communicatively couple to one or more UE terminals. The combination of an RNC and the Node Bs it controls (or their equivalents in other systems) is called a Radio Network System (RNS). A GSM RAN includes one or more base station controllers (BSCs), each controlling one or more base transceiver stations (BTSs). The combination of a BSC and the BTSs it controls is called a base station system (BSS).

Based on the foregoing it should be apparent that the exemplary embodiments of this invention provide a method, apparatus and computer program product(s) for a network to restrict its requests for measurement reports in a manner that such requests are regularly distributed among UEs in its cell. In an embodiment, the network receives measurement reports from a plurality of UEs, dynamically updates a database indicating the measurement report status of the plurality of UEs, and restricts its measurement report request based on the measurement report status in the database. In an embodiment, the restriction is specific to at least one UE based on the measurement report status associated with that one UE in the database.

The exemplary embodiments of this invention further provide a method, apparatus and computer program product(s) for a UE to determine a value p from a received broadcast request for a measurement report, to determine from the value p whether to reply to the received broadcast request, and if yes, then to carry out a measurement in accordance with the broadcast request and wirelessly transmit a response message with the measurement. In an embodiment, the determination whether to reply depends on the value p and the battery status of the UE.

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the exemplary embodiments of this invention may be illustrated and described as block diagrams, flow charts, or using some other pictorial representation, it is well understood that these blocks, apparatus, systems, techniques or methods described herein maybe implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the inventions may be practiced in various components such as integrated circuit chips and modules. The design of integrated circuits is by and large a highly automated process. Complex and powerful software tools are available for converting a logic level design into a semiconductor circuit design ready to be fabricated on a semiconductor substrate. Such software tools can automatically route conductors and locate components on a semiconductor substrate using well established rules of design, as well as libraries of pre-stored design modules. Once the design for a semiconductor circuit has been completed, the resultant design, in a standardized electronic format (e.g., Opus, GDSII, or the like) may be transmitted to a semiconductor fabrication facility for fabrication as one or more integrated circuit devices.

Various modifications and adaptations to the foregoing exemplary embodiments of this invention may become apparent to those skilled in the relevant arts in view of the foregoing description, when read in conjunction with the accompanying drawings. However, any, and all modifications will still fall within the scope of the non-limiting and exemplary embodiments of this invention.

For example, while the exemplary embodiments have been described above in the context of the UTRAN-LTE system, it should be appreciated that the exemplary embodiments of this invention are not limited for use with only this one particular type of wireless communication system, and that they may be used to advantage in other wireless communication systems.

Furthermore, some of the features of the various non-limiting and exemplary embodiments of this invention may be used to advantage without the corresponding use of other features. As such, the foregoing description should be considered as merely illustrative of the principles, teachings and exemplary embodiments of this invention, and not in limitation thereof.

## Claims

1. A method comprising:
receiving measurement reports from a plurality of user equipments UEs;
dynamically updating a local database that indicates measurement report status of the plurality of user equipments; and
restricting a request for a next measurement report to a limited number of the UEs based on the updated measurement report status.

2. The method of claim 1, wherein
restricting the request for the next measurement report comprises broadcasting the request for the next measurement report, the request comprising an information element adapted to inform a statistically limited number of the UEs to send their measurement report.

3. The method of claim 2, further comprising, prior to restricting the request:
determining a value that indicates a portion of a total number of UEs for which the next measurement report is desired;
and wherein the information element is either the determined value or derived from the determined value.

4. The method of claim 1, wherein the request for the next measurement report comprises a flag indicative of whether the next measurement report being requested is a high priority or a low priority.

5. The method of claim 1, wherein the local database indicates the measurement report history of each of the plurality of user equipments,
and restricting the request for the next measurement report comprises sending the request for the next measurement report to the limited number of the UEs that are selected based on a corresponding individual measurement report history.

6. A method comprising:
receiving at a mobile terminal a request for a measurement report, the request comprising an information element that informs a limited number of UEs to send a measurement report;
determining from the information element whether the mobile terminal is within the limited number;
for the case where it is determined that the mobile terminal is not within the limited number, not sending a measurement report in response; and
for the case where it is determined that the mobile terminal is within the limited number, sending a measurement report in response.

7. The method of claim 6, wherein
for the case where it is determined that the mobile terminal is within the limited number and the mobile terminal further determines that it has a low battery state, not sending a measurement report in response.

8. The method of claim 7, wherein determining from the information element whether the mobile terminal is within the limited number comprises executing a function of the ' information element and an indicator of battery state.

9. The method of claim 6, wherein determining from the information element comprises generating a random number and determining whether the generated random number is greater than or less than the information element.

10. The method of claim 6, wherein the request comprises a flag indicating high or low priority of the measurement report, and wherein for the case where the flag is a low priority and it is determined that the mobile terminal is within the limited number, the measurement report comprises neighbor cell measurements.

11. An apparatus comprising:
a receiver adapted to receive a request for a measurement report, the request comprising an information element that informs a limited number of UEs to send a measurement report;
a processor adapted to determine from the information element whether the apparatus is within the limited number; and
a transmitter adapted to send a measurement report in response to the determination that the apparatus is within the limited number and further adapted to not send a measurement report in response to the determination that the apparatus is not within the limited number.

12. The apparatus of claim 11, wherein
the processor is adapted to determine a battery state of the apparatus and the transmitter is adapted to not send a measurement report for the case where the determined battery state is low.

13. The apparatus of claim 12, wherein the processor is adapted to determine from the information element whether the apparatus is within the limited number by executing a function of the information element and an indicator of the battery state.

14. The apparatus of claim 11, wherein the processor is adapted to determine from the information element by generating a random number and comparing the generated random number to the information element.

15. The apparatus of claim 11, wherein the request comprises a flag indicating high or low priority of the measurement report, and wherein for the case where the flag is a low priority and the processor determines that the apparatus is within the limited number, the measurement report comprises neighbor cell measurements.

## Patentansprüche

1. Verfahren, umfassend:
Empfangen von Messungsmeldungen von mehreren Benutzergeräten UEs;
dynamisches Aktualisieren einer lokalen Datenbank, welche den Messungsmeldungsstatus der mehreren Benutzergeräte angibt; und
Einschränken einer Anforderung einer nächsten Messungsmeldung auf eine begrenzte Anzahl der UEs auf Basis des aktualisierten Messungsmeldungsstatus.

2. Verfahren nach Anspruch 1, wobei
Einschränken der Anforderung der nächsten Messungsmeldung Rundsenden der Anforderung der nächsten Messungsmeldung umfasst, wobei die Anforderung ein Informationselement aufweist, welches angepasst ist, eine statistisch begrenzte Anzahl der UEs zu informieren, ihre Messungsmeldung zu senden.

3. Verfahren nach Anspruch 2, ferner umfassend, vor Einschränken der Anforderung:
Bestimmen eines Werts, welcher einen Teil einer Gesamtanzahl an UEs angibt, für welchen die nächste Messungsmeldung gewünscht ist;
wobei das Informationselement entweder der bestimmte Wert ist oder von dem bestimmten Wert abgeleitet ist.

4. Verfahren nach Anspruch 1, wobei die Anforderung der nächsten Messungsmeldung eine Markierung enthält, welche angibt, ob die nächste Messungsmeldung, die angefordert wird, eine hohe Priorität oder eine niedrige Priorität aufweist.

5. Verfahren nach Anspruch 1, wobei die lokale Datenbank den Messungsmeldungsverlauf für jedes der mehreren Benutzergeräte angibt,
und wobei Einschränken der Anforderung der nächsten Messungsmeldung Senden der Anforderung der nächsten Messungsmeldung an die begrenzte Anzahl der UEs umfasst, welche auf Basis eines entsprechenden individuellen Messungsmeldungsverlaufs ausgewählt werden.

6. Verfahren, umfassend:
Empfangen, an einem mobilen Endgerät, einer Anforderung einer Messungsmeldung, wobei die Messungsmeldung ein Informationselement umfasst, welches eine begrenzte Anzahl an UEs informiert, eine Messungsmeldung zu senden;
Bestimmen, auf Grund des Informationselements, ob das mobile Endgerät sich innerhalb der begrenzten Anzahl befindet;
in dem Fall, dass bestimmt wird, dass das mobile Endgerät sich nicht innerhalb der begrenzten Anzahl befindet, Senden keiner Messungsmeldung als Antwort; und
in dem Fall, dass bestimmt wird, dass das mobile Endgerät sich innerhalb der begrenzten Anzahl befindet, Senden einer Messungsmeldung als Antwort.

7. Verfahren nach Anspruch 6, umfassend:
in dem Fall, dass bestimmt wird, dass das mobile Endgerät sich innerhalb der begrenzten Anzahl befindet, und das mobile Endgerät ferner bestimmt, dass es einen niedrigen Batterieladezustand aufweist, Senden keiner Messungsmeldung als Antwort.

8. Verfahren nach Anspruch 7, wobei das Bestimmen, auf Grund des Informationselements, ob das mobile Endgerät sich innerhalb der begrenzten Anzahl befindet, Ausführen einer Funktion des Informationselements und eines Indikators des Batterieladezustands umfasst.

9. Verfahren nach Anspruch 6, wobei das Bestimmen, auf Grund des Informationselements, Erzeugen einer Zufallszahl umfasst, und Bestimmen, ob die erzeugte Zufallszahl größer oder kleiner ist als das Informationselement.

10. Verfahren nach Anspruch 6, wobei die Anforderung eine Markierung umfasst, welche hohe oder niedrige Priorität der Messungsmeldung angibt, und wobei, in dem Fall, dass die Markierung eine niedrige Priorität angibt, und bestimmt wird, dass das mobile Endgerät sich innerhalb der begrenzten Anzahl befindet, die Messungsmeldung Nachbarzellenmessungen umfasst.

11. Vorrichtung, umfassend:
einen Empfänger, welcher angepasst ist zum Empfangen einer Anforderung einer Messungsmeldung, wobei die Anforderung ein Informationselement umfasst, welches eine begrenzte Anzahl an UEs informiert, eine Messungsmeldung zu senden;
einen Prozessor, welcher angepasst ist zum Bestimmen, auf Grund des Informationselements, ob die Vorrichtung sich innerhalb der begrenzten Anzahl befindet; und
einen Sender, welcher angepasst ist zum Senden einer Messungsmeldung als Antwort auf die Bestimmung, dass die Vorrichtung sich innerhalb der begrenzten Anzahl befindet, und welcher ferner angepasst ist zum Senden keiner Messungsmeldung als Antwort auf die Bestimmung, dass die Vorrichtung sich nicht innerhalb der begrenzten Anzahl befindet.

12. Vorrichtung nach Anspruch 11, wobei
der Prozessor angepasst ist zum Bestimmen eines Batterieladezustands der Vorrichtung, und der Sender angepasst ist zum Senden keiner Messungsmeldung in dem Fall, dass der bestimmte Batterieladezustand niedrig ist.

13. Vorrichtung nach Anspruch 12, wobei der Prozessor angepasst ist zum Bestimmen, auf Grund des Informationselements, ob die Vorrichtung sich innerhalb der begrenzten Anzahl befindet, durch Ausführen einer Funktion des Informationselements und eines Indikators des Batterieladezustands.

14. Vorrichtung nach Anspruch 11, wobei der Prozessor angepasst ist zum Bestimmen, auf Grund des Informationselements, durch Erzeugen einer Zufallszahl und durch Vergleichen der erzeugten Zufallszahl mit dem Informationselement.

15. Vorrichtung nach Anspruch 11, wobei die Anforderung eine Markierung umfasst, welche hohe oder niedrige Priorität der Messungsmeldung angibt, und wobei, in dem Fall, dass die Markierung eine niedrige Priorität angibt, und der Prozessor bestimmt, dass die Vorrichtung sich innerhalb der begrenzten Anzahl befindet, die Messungsmeldung Nachbarzellenmessungen umfasst.

## Revendications

1. Procédé comprenant :
la réception de rapports de mesures d'une pluralité d'équipements utilisateurs UE ;
la mise à jour dynamique d'une base de données locale qui indique un statut de rapport de mesures de la pluralité d'équipements utilisateurs ; et
la restriction d'une demande de rapport de mesures suivant à un nombre limité d'UE sur la base du statut de rapport de mesures mis à jour.

2. Procédé selon la revendication 1, dans lequel
la restriction de la demande de rapport de mesures suivant comprend la diffusion de la demande de rapport de mesures suivant, la demande comprenant un élément d'information apte à informer un nombre statistiquement limité d'UE d'envoyer leur rapport de mesures.

3. Procédé selon la revendication 2, comprenant en outre, avant la restriction de la demande :
la détermination d'une valeur qui indique une partie d'un nombre total d'UE pour lesquels le rapport de mesures suivant est souhaité ;
et dans lequel l'élément d'information est soit la valeur déterminée soit dérivé de la valeur déterminée.

4. Procédé selon la revendication 1, dans lequel la demande de rapport de mesures suivant comprend un drapeau indiquant si le rapport de mesures suivant demandé est de haute priorité ou de basse priorité.

5. Procédé selon la revendication 1, dans lequel la base de données locale indique l'historique des rapports de mesures de chacun de la pluralité d'équipements utilisateurs,
et la restriction de la demande de rapport de mesures suivant comprend l'envoi de la demande de rapport de mesures suivant au nombre limité d'UE qui sont sélectionnés sur la base d'un historique correspondant de rapports de mesures individuels.

6. Procédé comprenant :
la réception à un terminal mobile d'une demande de rapport de mesures, la demande comprenant un élément d'information qui informe un nombre limité d'UE d'envoyer un rapport de mesures ;
la détermination à partir de l'élément d'information que le terminal mobile se trouve ou pas dans le nombre limité ;
dans le cas où il est déterminé que le terminal mobile ne se trouve pas dans le nombre limité, aucun rapport de mesures n'est envoyé en réponse ; et
dans le cas où il est déterminé que le terminal mobile se trouve dans le nombre limité, un rapport de mesures est envoyé en réponse.

7. Procédé selon la revendication 6, dans lequel
dans le cas où il est déterminé que le terminal mobile se trouve dans le nombre limité et le terminal mobile détermine en outre qu'il a un état de batterie faible, aucun rapport de mesures n'est envoyé en réponse.

8. Procédé selon la revendication 7, dans lequel la détermination à partir de l'élément d'information que le terminal mobile se trouve ou pas dans le nombre limité comprend l'exécution d'une fonction de l'élément d'information et d'un indicateur de l'état de batterie.

9. Procédé selon la revendication 6, dans lequel la détermination à partir de l'élément d'information comprend la génération d'un nombre aléatoire et la détermination que le nombre aléatoire généré est supérieur ou inférieur à l'élément d'information.

10. Procédé selon la revendication 6, dans lequel la demande comprend un drapeau indiquant une haute ou basse priorité du rapport de mesures, et dans lequel dans le cas où le drapeau indique une basse priorité et il est déterminé que le terminal mobile se trouve dans le nombre limité, le rapport de mesures comprend des mesures de cellules voisines.

11. Appareil comprenant :
un récepteur apte à recevoir une demande de rapport de mesures, la demande comprenant un élément d'information qui informe un nombre limité d'UE d'envoyer un rapport de mesures ;
un processeur apte à déterminer à partir de l'élément d'information si l'appareil se trouve dans le nombre limité ; et
un émetteur apte à envoyer un rapport de mesures en réponse à la détermination que l'appareil se trouve dans le nombre limité et apte en outre à ne pas envoyer de rapport de mesures en réponse à la détermination que l'appareil ne se trouve pas dans le nombre limité.

12. Appareil selon la revendication 11, dans lequel
le processeur est apte à déterminer un état de batterie de l'appareil et l'émetteur est apte à ne pas envoyer de rapport de mesures dans le cas où l'état de batterie déterminé est faible.

13. Appareil selon la revendication 12, dans lequel le processeur est apte à déterminer à partir de l'élément d'information si l'appareil se trouve dans le nombre limité en exécutant une fonction de l'élément d'information et un indicateur de l'état de batterie.

14. Appareil selon la revendication 11, dans lequel le processeur est apte à déterminer à partir de l'élément d'information en générant un nombre aléatoire et en comparant le nombre aléatoire généré à l'élément d'information.

15. Appareil selon la revendication 11, dans lequel la demande comprend un drapeau indiquant une haute ou basse priorité du rapport de mesures, et dans lequel dans le cas où le drapeau indique une basse priorité et le processeur détermine que l'appareil se trouve dans le nombre limité, le rapport de mesures comprend des mesures de cellules voisines.
